# EUROPÄISCHE PATENTANMELDUNG

(11) **EP 0 960 687 A2**
(43) Veröffentlichungstag der Anmeldung: **01.12.1999**
(21) Anmeldenummer: 99108208.2
(22) Anmeldetag: 27.04.1999
(51) Int. Cl.: B23Q 7/14, B23Q 7/00

(54) **Automationszelle zur Handhabung von Teilen**

(30) Priorität: 29.05.1998 DE 19824014
(71) Anmelder: FELSOMAT GmbH & Co. KG, D-75203 Königsbach-Stein (DE)
(72) Erfinder: Jäger, Helmut F., 75203 Königsbach-Stein (DE); Peschina, Jürgen, 75438 Knittlingen (DE); Dietrich, Bernard, 26100 Romans-sur-Isere (FR)
(74) Vertreter: Gahlert, Stefan, Dr.-Ing.

(57) **Zusammenfassung**

Es wird eine Automationszelle zur Handhabung von Teilen (31) angegeben, mit einem nach außen abgeschlossenen Handhabungsraum (11), innerhalb dessen eine Ladeeinrichtung (12) zur Aufnahme mindestens eines Teileträgers (30, 30a) in Horizontairichtung und in Vertikalrichtung verfahrbar angeordnet ist. In den Handhabungsraum (11) können Teile (31) mit Hilfe einer Zuführeinrichtung (29) ein- bzw. ausgeschleust werden, die vorzugsweise als Transportwagen ausgebildet ist und vorzugsweise mit einer Unterlage (33) zur Aufnahme eines Teileträgers (30) in Arbeitshöhe ausgebildet ist. Die Teileträger (30, 30a) können durch eine Ladeöffnung (56), deren Öffnen und Schließen vorzugsweise automatisch gesteuert wird, in den Handhabungsraum (11) überführt werden.

## Beschreibung

Die Erfindung betrifft eine Automationszelle zur Handhabung von Teilen, mit einem nach außen abgeschlossenen Handhabungsraum, innerhalb dessen eine Ladeeinrichtung zur Aufnahme mindestens eines Teileträgers vorgesehen ist, die entlang einer horizontalen Achse und einer vertikalen Achse gesteuert verfahrbaren Schlitten aufweist, und mit einer Zuführeinrichtung, die an den Handhabungsraum ankoppelbar ist, um Teileträger in den Handhabungsraum einzuschleusen und aus diesem auszuschleusen.

Die Erfindung betrifft ferner eine Automationszelle zur Handhabung von Teilen, mit einem nach außen durch ein Gehäuse abgeschlossenen Handhabungsraum, innerhalb dessen eine Ladeeinrichtung zur Aufnahme mindestens eines Teileträgers verfahrbar angeordnet ist, wobei das Gehäuse eine Ladeöffnung aufweist, an die eine Zuführeinrichtung ankoppelbar ist, um Teileträger in den Handhabungsraum einzuschleusen und aus diesem auszuschleusen.

Automationszellen solcher Art sind grundsätzlich bekannt. Sie weisen einen abgeschlossenen Handhabungsraum auf, innerhalb dessen eine Palettenumsetzvorrichtung vorgesehen sein kann oder eine sonstige Handhabungseinrichtung, mittels derer Teile von einem Teileträger übernommen werden können und zu einer benachbarten Funktionseinheit, wie etwa einer Werkzeugmaschine verfahren werden können und umgekehrt. Um Teile in den Handhabungsraum einzubringen und aus diesem zu entnehmen ist eine Zuführeinrichtung vorgesehen, beispielsweise ein Band. Innerhalb des Handhabungsraums können die Teile oder Teileträger mittels einer Horizontalachse und einer Vertikalachse verfahren werden, wie es beispielsweise aus der DE 196 07 563 C1 bekannt ist.

Zum Aufnehmen der einzelnen Teileträger sind hierbei in der Regel Greifeinrichtungen oder Klinkeneinrichtungen erforderlich, um ein automatisches Aufnehmen und Absetzen von Teileträgern zu ermöglichen.

Eine aus der DE 44 09 532 bekannte Automationszelle dient zur Versorgung einer nachgeordneten Bearbeitungseinrichtung mit Werkstücken und weist einen durch einen Schutzzaun nach außen abgeschlossenen Handhabungsraum auf, der an einer Seite eine Ladeöffnung aufweist, an der eine Stapelwechseleinheit, die als Drehtisch mit einem H-förmigen Drehgestell ausgebildet ist, in das Werkstückträgerstapel auf Rollwagen eingefahren werden können, vorgesehen ist. Der Drehtisch weist im Bereich der Stapelwechseleinheit einen Schutzwandabschnitt auf, durch den die Ladeöffnung des Handhabungsraums vollständig gegenüber einem vorgeordneten Laderaum abgetrennt ist, so daß während der Bearbeitung der Werkstückträger innerhalb des Handhabungsraums im Laderaum ohne Gefahr ein Wechsel der Werkstückträgerstapel durchgeführt werden kann. Der Laderaum ist durch Türen nach außen abgeschlossen, die bei geschlossenem Schutzwandabschnitt geöffnet werden können, um Werkstückträgerstapel in den im Laderaum liegenden Bereich der Stapelwechseleinheit austauschen zu können.

Die bekannte Automationszelle ist besonders für hohe Stückzahlen in der Serienfertigung geeignet, wobei durch Werkstückträgerstapel innerhalb des Handhabungsraums und innerhalb des Laderaums eine große Pufferwirkung auftritt, durch die eine Entkopplung zwischen Handhabung der Teile innerhalb des Handhabungsraums und Zuführung oder Entnahme der Teileträger aus dem Laderaum erreicht wird. Innerhalb des Handhabungsraums ist eine Ladeeinrichtung vorgesehen, die zwei miteinander zwangsgetrieblich gekoppelte Schwingen aufweist, an deren äußerem Ende ein Handhabungselement vorgesehen ist, um damit einzelne Werkstückträger innerhalb des Handhabungsraums umstapeln und zu einer Bereitstellungseinrichtung, die vorzugsweise als Portal ausgebildet ist, in eine Bereitstellungsposition zur Entnahme und zur Aufnahme von Teilen überführen zu können.

Die bekannte Automationszelle ist somit zur Großserienfertigung geeignet und kann auch zur gleichzeitigen Versorgung von mehreren Bearbeitungszentren verwendet werden, die mit hoher Geschwindigkeit arbeiten. Andererseits wird durch das Drehgestell der Stapelwechseleinheit eine gewisse Breite der Zelle vorgegeben, die wegen des Drehkreises nicht vollständig für eine Palettenbreite genutzt werden kann. Auch ist die innerhalb des Handhabungsraums verwendete Ladeeinrichtung mit zwei miteinander zwangsgekoppelten Schwingen als Palettenumsetzer, die nur eine einzige gesteuerte (Dreh-) Achse benötigt, relativ unflexibel.

Der Erfindung liegt somit die Aufgabe zugrunde, eine Automationszelle zu schaffen, die eine optimierte Raumausnutzung ermöglicht und relativ kostengünstig und flexibel insbesondere in der Fertigung von kleinen und mittleren Serien eingesetzt werden kann.

Diese Aufgabe wird erfindungsgemäß bei einer Automationszelle zur Handhabung von Teilen, mit einem nach außen abgeschlossenen Handhabungsraum, innerhalb dessen eine Ladeeinrichtung zur Aufnahme mindestens eines Teileträgers vorgesehen ist, die einen entlang einer horizontalen Achse und einer vertikalen Achse gesteuert verfahrbaren Schlitten aufweist, und mit einer Zuführeinrichtung, die an den Handhabungsraum ankoppelbar ist, um Teileträger in den Handhabungsraum einzuschleusen und aus diesem auszuschleusen, dadurch gelöst, daß am Schlitten Koppelelemente vorgesehen sind, denen Gegenelemente am Teileträger zugeordnet sind, derart, daß der Teileträger durch Verfahren des Schlittens von der Zuführeinrichtung auf den Schlitten übernommen werden und bei einem weiteren Verfahren des Schlittens an die Zuführeinrichtung übergeben werden kann.

Die Aufgabe der Erfindung wird auf diese Weise vollkommen gelöst.

Erfindungsgemäß wird nämlich eine erhebliche Vereinfachung und eine erhebliche Kostenersparnis dadurch erreicht, daß auf die Verwendung von bisher üblichen Greif- oder Klinkenelementen vollständig verzichtet werden kann. Es wird nämlich erfindungsgemäß die Verfahrbewegung des Schlittens selbst zur Übernahme bzw. Übergabe des Teileträgers ausgenutzt. Dadurch ergibt sich auch eine vereinfachte und besonders kompakte Bauweise.

Gemäß einer weiteren bevorzugten Ausführungsform der Erfindung, die auch unabhängig von der sonstigen Ausführung der Automationszelle selbständig schutzfähig ist, ist innerhalb des Handhabungsraums ein Speicherplatz vorgesehen, auf dem ein Teileträger absetzbar ist, wobei am Schlitten ein erster Satz von Koppelelementen zur Übergabe eines Teileträgers zwischen Zuführeinrichtung und Speicherplatz vorgesehen ist, und wobei am Schlitten ein zweiter Satz von Koppelelementen zum verfahren eines Teileträgers zwischen Speicherplatz und einer Bereitstellungsposition vorgesehen ist, in der die Bereitstellungseinrichtung Teile von dem Teileträger aufnehmen und aus dem Handhabungsraum herausfahren kann und Teile auf dem Teileträger ablegen kann.

Durch diese Maßnahme wird auch bei Zuführung einzelner Teileträger mit der Zuführeinrichtung eine Entkopplung zwischen dem Bearbeitungsvorgang innerhalb des Handhabungsraums und dem Zuführ- bzw. Entnahmevorgang einzelner Teileträger in den Handhabungsraum ermöglicht. Auf diese Weise kann nämlich ein Teileträger beispielsweise mit Rohteilen in den Handhabungsraum eingefahren und automatisch abgearbeitet werden, während zeitentkoppelt ein neuer Teileträger in den Handhabungsraum eingefahren und der alte Teileträger entnommen werden kann.

In zusätzlicher Weiterbildung der Erfindung sind die Koppelelemente an einem jeden Teileträger als vorstehende Bolzenenden ausgebildet, denen entsprechende Haken als Gegenelemente am Schlitten zugeordnet sind, oder an den Teileträgern sind Haken vorgesehen, denen entsprechende Bolzen als Gegenelemente am Schlitten zugeordnet sind.

Auf diese Weise ergibt sich eine besonders einfache Ausgestaltung und zuverlässige Handhabung zur Übernahme bzw. Übergabe der Teileträger unter Ausnutzung der linearen Verfahrbewegung des Schlittens.

In zusätzlicher Weiterbildung der Erfindung umfaßt die Bereitstellungseinrichtung ein Portal, an dem ein Schlitten mit einem Handhabungselement verfahrbar ist, das zur Aufnahme und zur Ablage von Teilen auf einem Teileträger in der Bereitstellungsposition von oben ausgebildet ist.

Gemäß einer weiteren Ausführung der Erfindung ist der Speicherplatz auf einem Niveau unterhalb der Bereitstellungsposition vorgesehen, wobei der erste Satz von Koppelelementen am unteren Ende des Schlittens vorgesehen ist, und wobei der zweite Satz von Koppelelementen am oberen Ende des Schlittens vorgesehen ist.

Durch diese Maßnahmen läßt sich die zuvor erwähnte Entkopplung zwischen der Bearbeitung von Teilen in der Bearbeitungsposition einerseits und zwischen der Zuführung bzw. Entnahme von Teileträgern und Übergabe an den Speicherplatz andererseits auf besonders einfache Weise erreichen.

Die Ladeeinrichtung weist bei den zuvor bereits beschriebenen Ausführungen vorzugsweise eine gesteuert verfahrbare Horizontalachse auf, die mit einer gesteuert verfahren Vertikalachse gekoppelt ist.

In weiter bevorzugter Ausgestaltung der Erfindung weist die Automationszelle einen vertikalen Ständer auf, in dem eine Vertikalachse der Ladeeinrichtung aufgenommen ist.

Auf diese Weise lassen sich Antrieb und Führung der Vertikalachse in platz- und kostensparender Weise in den vertikalen Ständer integrieren.

In weiter bevorzugter Ausführung der Erfindung ist der vertikale Ständer mit einem Sockel verbunden, der an seinem gegenüber liegenden Ende mit einem zweiten vertikalen Ständer verbindbar ist.

Auf diese Weise kann die Automationszelle mit einem L- oder U-förmigen Querschnitt aufgebaut werden, wodurch ein besonders platzsparender Aufbau erreicht wird und die Breite des Teileträgers vollständig ausgenutzt wird. Hierbei können zusätzlich Komponenten in weiteren vertikalen Ständer aufgenommen werden, soweit dies erforderlich ist. Durch die Verwendung eines Sockels, der als verbindungssteifes Element ausgebildet sein kann, wird ein modularer Aufbau und eine Vormontage der einzelnen Komponenten im Werk des Herstellers ermöglicht, so daß keine aufwendigen Endjustierarbeiten bei der Aufstellung vor Ort erforderlich sind.

In zusätzlicher Weiterbildung der Erfindung ist am Schlitten zumindest ein Sensor vorgesehen, der eine Erfassung der Relativposition zu einem Teileträger ermöglicht.

Durch diese Maßnahme ist es gewährleistet, daß Fehlertoleranzen, die durch ein nicht absolut korrektes Positionieren des Teileträgers auf der Zentrierung der Unterlagen der Zuführeinrichtung oder auf dem Speicherplatz innerhalb des Handhabungsraums automatisch ausgeglichen bzw. korrigiert werden können.

Die Aufgabe der Erfindung wird ferner bei einer Automationszelle zur Handhabung von Teilen, mit einem nach außen durch ein Gehäuse abgeschlossenen Handhabungsraum, innerhalb dessen eine Ladeeinrichtung zur Aufnahme mindestens eines Teileträgers verfahrbar angeordnet ist, wobei das Gehäuse eine Ladeöffnunq aufweist, an die eine Zuführeinrichtung ankoppelbar ist, um Teileträger in den Handhabungsraum einzuschleusen und aus diesem auszuschleusen, dadurch gelöst, daß die Ladeöffnung durch die Zuführeinrichtung verschließbar ist, und daß eine Verriegelungseinrichtung zur Verriegelung der Zuführeinrichtung mit dem Gehäuse vorgesehen ist.

Auch auf diese Weise wird die Aufgabe der Erfindung vollkommen gelöst.

Erfindungsgemäß wird nämlich auf einen zusätzlichen Laderaum zur Entkopplung zwischen Handhabung der Teile im Inneren des Handhabungsraums und Lade- und Entladevorgängen verzichtet. Statt dessen wird die Zuführeinrichtung selbst zur Abschirmung der Ladeöffnung nach außen genutzt, da die Tür der Ladeöffnung nur bei angekoppelter Zuführeinrichtung geöffnet werden kann.

Somit entfällt ein zusätzlicher, dem Handhabungsraum vorgelagerter Laderaum, da ein Zugriff auf einen Teileträger der Zuführeinrichtung durch die Ladeöffnung nur bei vollständig angekoppelter Zuführeinrichtung möglich ist. Auf diese Weise kann die Baugröße der Automationszelle deutlich verkleinert werden, und die Automationszelle kann kostengünstiger hergestellt werden. Da kein Drehgestell notwendig ist, wird auch die Raumausnutzung in der Breite der Teileträger verbessert.

In bevorzugter Weiterbildung der Erfindung ist die Zuführeinrichtung als Transportwagen ausgebildet, der eine Verkleidung zur Abdeckung der Ladeöffnung aufweist.

Die Zuführeinrichtung kann somit als verfahrbarer Transportwagen genutzt werden, was insbesondere bei der Kleinserienfertigung von Vorteil ist.

Der Transportwagen kann zur Aufnahme von jeweils nur einem Teileträger ausgebildet sein, was für eine Automationszelle, die für kleinere oder mittlere Serien eingesetzt wird, ausreichend ist. Darüber hinaus ist es grundsätzlich auch denkbar, die Zuführeinrichtung zur Zuführung von Stapeln aus Teileträgern auszubilden oder sogar eine Stapelwechseleinheit mit vertikaler Drehachse gemäß der DE 44 09 532 A1 anzuflanschen.

Gemäß einer weiteren bevorzugten Ausführung der Erfindung ist innerhalb des Gehäuses eine schleuse zum Einschleusen der Zuführeinrichtung vorgesehen, wobei die Schleuse gegenüber dem Handhabungsraum abgetrennt und mit diesem über eine Beschickungstür verbunden ist.

Durch Verwendung einer derartigen Schleuse wird eine vollständige Entkopplung der Vorgänge innerhalb des abgeschlossenen Handhabungsraums und des Be- und Entladens durch Ein- bzw. Ausfahren der Zuführeinrichtung in die Schleuse erreicht. Somit können innerhalb des Handhabungsraums gleichzeitig Teile gehandhabt werden, während mittels der Zuführeinrichtung Teile aus der Schleuse des Handhabungsraums aus- bzw. in diese eingeschleust werden.

Darüber hinaus ist es möglich, auf eine derartige Schleuse zu verzichten, wobei dann aus Gründen der Arbeitssicherheit bevorzugt ist, daß bei nicht geschlossener Verriegelung der Zuführeinrichtung mit dem Gehäuse die Einrichtungen innerhalb des Handhabungsraums zur Handhabung von Teilen abgeschaltet sind, so daß auch während des Wechselvorgangs eine Unfallgefahr vollständig vermieden wird.

In weiter bevorzugter Ausführung ist eine Verriegelungseinrichtung zur Verriegelung der Beschickungstür mit der Schleuse vorgesehen, die eine Ausschleusung der Zuführeinrichtung nur bei geschlossener Beschickungstür erlaubt.

Auf diese Weise wird eine Sicherheit gegen Fehlbedienung gewährleistet.

Gemäß einer weiteren bevorzugten Ausführung der Erfindung weist die Zuführeinrichtung eine Unterlage zur Aufnahme und Zentrierung eines Teileträgers auf.

Diese Maßnahme hat den Vorteil, daß anstelle der sonst notwendigen kundenspezifisch ausgebildeten Teileträger lediglich die Unterlage für einen Teileträger an der vorbestimmten Position der Zuführeinrichtung vorgesehen werden muß, so daß die Teileträger vom Anwender selbst nur unter Einhaltung gewisser Randbedingungen, wie etwa Gesamtaußenmaße und bestimmte Anschlußpunkte an vorgegebenen Stellen zur Ermöglichung der Handhabung, hergestellt werden können. Dies führt zu einer erheblichen Vereinfachung sowohl beim Hersteller der Automationszelle, da die Teilevielfalt gesenkt wird und die Notwendigkeit von Sonderanfertigungen verringert wird, als auch beim Anwender, da er jederzeit nach seinen eigenen Bedürfnissen geeignete Teileträger selbst herstellen kann.

Es versteht sich, daß die vorstehend genannten und die nachstehend noch zu erläuternden Merkmale der Erfindung nicht nur in der jeweils angegebenen Kombination sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnung. Es zeigen
- Figur 1: eine Seitenansicht einer erfindungsgemäßen Automationszelle in stark vereinfachter, schematischer Darstellung, und
- Figur 2: eine abgewandelte Ausführung der Automationszelle gemäß Fig. 1.

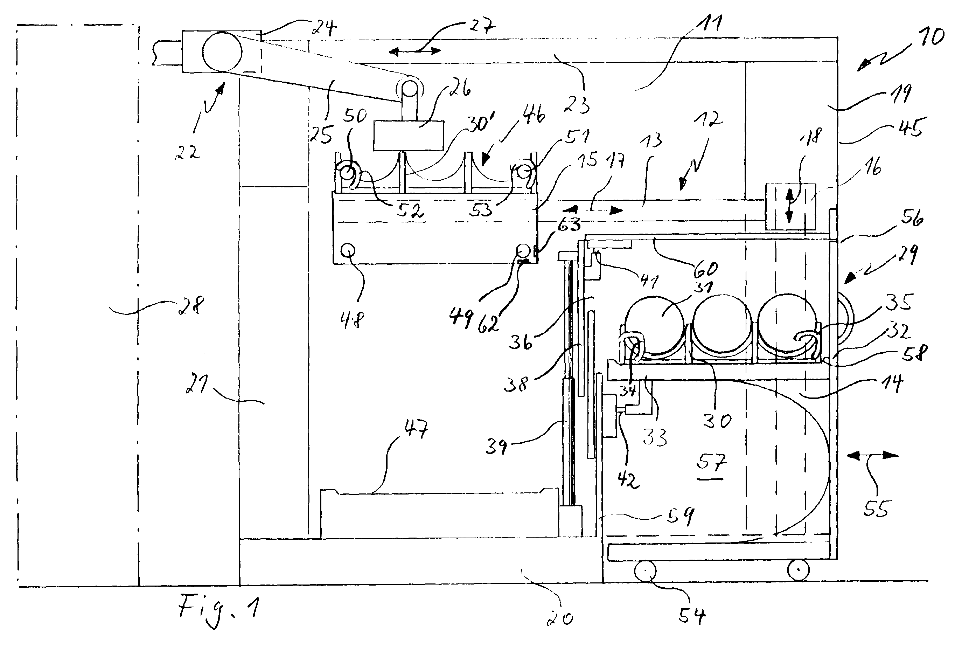

Fig. 1 ist eine erfindungsgemäße Automationszelle insgesamt mit der Ziffer 10 bezeichnet.

Die Automationszelle 10 weist einen Sockel 20 auf, der an seinen beiden Enden je durch einen vertikalen Ständer 19 bzw. 21 abgeschlossen ist. Der Sockel 20 nimmt die verschiedenen notwendigen Versorgungsleitungen, wie elektrische und hydraulische Leitungen, auf und kann gleichzeitig als Ölauffangwanne ausgebildet sein. Der Sockel 20 ist verwindungssteif ausgeführt und mit einzelnen Anschlußpunkten versehen, an die die betreffenden Zusatzbauteile an vorgegebenen Stellen angeflanscht werden können. Durch diese Ausführung wird eine Vormontage der gesamten Automationszelle 10 im Werk des Herstellers ermöglicht, so daß vor Ort bei der Aufstellung der Automationszelle 10 keine aufwendigen Endjustierarbeiten erforderlich sind.

Die Automationszelle 10 umfaßt einen nach außen ringsum abgeschlossenen Arbeitsraum 11, der durch die beiden Ständer 19, 21 an den Stirnseiten und durch einen entsprechenden Schutzzaun an den Seitenflächen abgegrenzt ist. Die Automationszelle 10 umschließt somit einen quaderförmigen Raum.

In der in der Figur rechten Hälfte der Automationszelle 10 ist in dem Handhabungsraum 11 eine etwa quaderförmige Schleuse 61 gebildet und durch eine Verkleidung nach außen abgeschlossen, in die eine insgesamt mit der Ziffer 29 bezeichnete Zuführeinrichtung einfahrbar ist. Am äußeren Ende der Schleuse 61 ist eine Ladeöffnung 56 gebildet, die bei eingefahrener Zuführeinrichtung 24 durch deren Verkleidung vollständig geschlossen ist.

Die Zuführeinrichtung 29 ist als Transportwagen ausgebildet, der auf Rollen 54 verfahrbar ist. Die Zuführeinrichtung 29 weist in Arbeitshöhe für einen stehenden Arbeiter, also in einer Höhe zwischen etwa 55 bis 105 cm, eine Unterlage 33 auf, die mit einer vertiefung 58 als Zentrierung zur Aufnahme eines Teileträgers 30 ausgebildet ist. Die Höhe der Unterlage ist so gewählt, daß sich unter Berücksichtigung der Höhe eines Teileträgers eine ergonomische Arbeitshöhe vorzugsweise etwa zwischen 70 und 85 cm ergibt. Der Teileträger 30 ist als Drahtkorb ausgebildet und der Form von aufzunehmenden Teilen oder Werkstücken 31 angepaßt. Der Teileträger 30 kann natürlich auch aus Blech, Kunststoff oder dergleichen bestehen. Lediglich die Außenabmessungen des Teileträgers 30 sind an die entsprechende Zentrierung der Unterlage 33 der Zuführeinrichtung 29 angepaßt. Ferner ist am vorderen und hinteren Ende des Teileträgers 30 an den Außenseiten jeweils ein Haken an vorbestimmten Stellen angebracht. Diese Haken dienen als Gegenelemente 34, 35 zur Aufnahme des Teileträgers 30 mittels angepaßter Koppelelemente in Form von Bolzen, die in die Haken einfahrbar sind, wie noch nachfolgend näher beschrieben wird.

Die der Zuführeinrichtung 29 zugewandte Seite des Handhabungsraums 11 ist durch eine Abschlußwand 59 abgeschlossen, in deren oberem Ende eine Beschickungsöffnung 56 vorgesehen ist, die durch eine Teleskop-Schiebetür 38 verschließbar ist. Form und Größe der Beschickungsöffnung 36 sind derart ausgebildet, daß der Teileträger 30 bei geöffneter Tür 38 durch die Beschickungsöffnung 36 hindurch in den Handhabungsraum 11 eingeführt bzw. aus diesem entnommen und auf die Unterlage 33 übergeben werden kann.

Die Tür 38 läßt sich mittels eines Pneumatikzylinders 39 in Vertikalrichtung verschieben, um die Beschickungsöffnung 36 zu öffnen oder zu schließen.

In der in der Figur dargestellten vollständig in die Schleuse 61 des Handhabungsraums 11 eingeschobenen Stellung der Zuführeinrichtung 29 ist diese über eine Verriegelung 42 zusätzlich mit dem Gehäuse 45 verriegelt, die mit Sicherheitsfunktionen gekoppelt sein kann, so daß beispielsweise nur bei vollständig eingefahrener Zuführeinrichtung 29 oder bei vollständig ausgefahrener Zuführeinrichtung 29 eine Handhabung von Teilen 31 innerhalb des Handhabungsraums 11 ermöglicht ist. Zusätzlich ist auch für die Beschickungstür 38 eine Verriegelung 41 vorgesehen, um die vollständige Schließung der Tür 38 zu überwachen.

Bei vollständig eingefahrener Zuführeinrichtung 29 ist die Ladeöffnung 56 durch die Verkleidung 32 an der vorderen Stirnfläche der Zuführeinrichtung 29 vollständig berührungssicher nach außen abgeschlossen. Die Zuführeinrichtung 29 kann nur dann in Richtung des Pfeiles 55 aus der Schleuse 61 herausgefahren werden, wenn die Beschickungsöffnung 36 durch den Pneumatikzylinder 39 automatisch verschlossen wurde. Die Zuführeinrichtung 29 und die Beschickungsöffnung 36 sind hierzu über Sicherheitsschalter an den Verriegelungen 41 und 42 derart miteinander gekoppelt, daß ein Herausfahren der Zuführeinrichtung 29 bei nicht vollständig geschlossener Beschickungsöffnung 36 die Anlage sofort stillsetzen würde.

Auf jeden Fall ist somit die Zuführeinrichtung 29 derart mit der Schleuse 57 gekoppelt, daß sowohl bei in die Schleuse 61 eingefahrener Zuführeinrichtung 29, als auch bei teilweise oder vollständig ausgefahrener Zuführeinrichtung 29 ein unbeabsichtigtes Eingreifen in den Handhabungsraum 11 durch die Beschickungsöffnung 36 nicht möglich ist.

Im Ständer 19 ist an den beiden Seitenflächen je eine Vertikalachse 14 aufgenommen, die das Verfahren eines Schlittens 16 mit Hilfe eines nicht näher dargestellten Antriebes, der z.B. als elektromotorisch angetriebener Zahnriemenantrieb ausgebildet sein kann, ermöglicht. Der Schlitten 16 ist so in Vertikalrichtung gesteuert verfahrbar, wie durch den Doppelpfeil 18 angedeutet ist.

An Schlitten 16 ist eine Horizontalachse 13 befestigt, die in den Handhabungsraum 11 bis kurz vor den anderen Ständer 21 hineinreicht und die zwei seitliche Führungsschienen umfaßt, auf denen ein Schlitten 15 in Horizontalrichtung gesteuert verfahrbar ist, wie durch den Doppelpfeil 17 angedeutet ist.

Am Schlitten 15 befindet sich an der Unterseite ein erster Satz von Koppelelementen 48, 49 in Form von insgesamt vier jeweils seitlich nach innen hervorstehenden Bolzenenden, sowie am oberen Ende ein zweiter Satz von Koppelelementen 50, 51, wiederum mit insgesamt vier Bolzenenden. Diese Koppelelemente 48, 59 bzw. 50, 51 sind derart angeordnet und ausgerichtet, daß sie mit den Gegenelementen eines Teileträgers, die eine Hakenform aufweisen, zusammenwirken, um bei in die Haken eingefahrenen Bolzenenden eine Mitnahme des betreffenden Teileträgers zu ermöglichen.

In der Figur ist auf dem Schlitten 15 in einer hier dargestellten Bereitstellungsposition, die mit der Ziffer 46 angedeutet ist, ein Teileträger 30' mit seinen Gegenelementen 52, 53 an den Koppelelementen 50, 51 am oberen Ende des Schlittens 15 aufgenommen. An dem Teileträger 30' in der Bereitstellungsposition sind keine Teile bzw. Werkstücke 31 dargestellt, da sich diese in dem hier dargestellten Zustand beispielsweise alle in einer benachbarten Werkzeugmaschine 28 befinden, die von der Automationszelle 10 mit Teilen 31 versorgt wird.

Zur Überführung von Teilen 31 aus der Bereitstellungsposition 46 zu der Werkzeugmaschine 28 und zur Überführung von bearbeiteten Teilen aus der Werkzeugmaschine 28 zum Teileträger 30' ist eine Bereitstellungseinrichtung vorgesehen, die insgesamt mit der Ziffer 22 angedeutet ist. Die Bereitstellungseinrichtung 22 ist im hier dargestellten Beispiel als Portal 23 ausgebildet, das am oberen Ende der Automationszelle 10 verläuft und auf dem ein Schlitten 24 in Horizontalrichtung verfahrbar ist, wie durch den Doppelpfeil 27 angedeutet ist. Es versteht sich, daß das Portal 23 auch um 90° versetzt angeordnet sein könnte, sowie auch senkrecht zur Zeichenebene verlaufen könnte.

An dem Schlitten 24 kann, wie in der Figur dargestellt, ein Schwenkarm 25 aufgenommen sein, an dessen freiem Ende ein lediglich schematisch mit der Ziffer 26 angedeutetes Greifelement zur Handhabung von Teilen 31 vorgesehen ist. Alternativ kann an dem Schlitten 24 wiederum eine Vertikalachse vorgesehen sein, an der ein Greifelement 26 oder dergleichen verfahrbar ist. Mittels des Schlittens 24, des Schwenkarms 25 und des Greifelementes 26 können Teile 31 aus der Bereitstellungsposition 46 vom Teileträger 30' aufgenommen werden und über das Portal 23 in die benachbarte Werkzeugmaschine 28 zur Bearbeitung übergeben werden und in entsprechender Weise bearbeitete Teile aus der Werkzeugmaschine 28 nach ihrer Bearbeitung übernommen und auf dem Teileträger 30' abgelegt werden.

Unterhalb der Bereitstellungsposition 46 befindet sich am unteren Ende des Handhabungsraums 11 ein Speicherplatz 47, auf dem ein weiterer Teileträger wiederum in geeigneter Weise zentriert abgesetzt werden kann.

Dadurch, daß am unteren Ende des Schlittens 15 ein zweiter Satz von Koppelelementen 48, 49 aufgenommen ist, wird der Vorgang der Übergabe von Teilen 31 von einem Teileträger 30' in der Bereitstellungsposition 46 zu einer benachbarten Werkzeugmaschine 28 und umgekehrt von dem Ein- und Ausführen eines weiteren Teileträgers 30 in den Handhabungsraum 11 mit Hilfe der Zuführeinrichtung 29 entkoppelt.

Im normalen Betrieb kann sich beispielsweise ein Teileträger 30' in der in der Figur dargestellten Bereitstellungsposition 46 befinden und an den oberen Koppelelementen 50, 51 des Schlittens 50 aufgenommen sein. Während dieser Teileträger 30' zur Versorgung der Werkzeugmaschine 28 mit Teilen 31 verwendet wird und nach und nach mit Hilfe des Greifelementes 26 abgearbeitet wird, kann bereits ein weiterer Teileträger 30 mit der Zuführeinrichtung 29 in die Schleuse 57 des Handhabungsraums 11 eingefahren werden. Zu gegebener Zeit, wenn die Teile auf dem in der Bereitstellungsposition 46 befindlichen Teileträger 30' abgearbeitet sind, verfährt der Schlitten 15 zu dem auf der Zuführeinrichtung 59 befindlichen Teileträger 30 mit zur Bearbeitung anstehenden Rohteilen 31 und nimmt diesen Teileträger mit den unteren Koppelelementen 48, 49 auf. Sodann wird der Teileträger 30 durch die geöffnete Tür 36 in den Handhabungsraum 11 eingefahren und vorzugsweise zunächst auf dem Speicherplatz 47 abgesetzt. Anschließend kann der inzwischen abgearbeitete Teileträger 30', der sich auf den oberen Koppelelementen 50, 51 des Schlittens 15 befindet, auf der Unterlage 33 der Zuführeinrichtung 29 abgesetzt werden und der auf dem Speicherplatz 47 befindliche Teileträger 30 mit Rohteilen wieder mit den oberen Koppelelementen 50, 51 übernommen werden und in die Bereitstellungsposition 46 zur weiteren Versorgung der Werkzeugmaschine 28 mit Teilen verfahren werden. Der auf der Zuführeinrichtung 29 befindliche Teileträger kann dann in der Zwischenzeit schon wieder ausgetauscht werden usw.

Es versteht sich, daß je nach der gewünschten Bearbeitung und je nach der Reihenfolge der Aufnahme und Zuführung von Fertigteilen und Rohteilen unterschiedliche Verfahrensabläufe denkbar sind. Auf jeden Fall wird mit nur einem verfahrbaren Schlitten 15 durch die zwei Sätze von Koppelelementen 48, 49 bzw. 50, 51 und durch den zusätzlichen Speicherplatz 47 eine Zeitentkopplung zwischen der Überführung von Teilen 31 in der Bereitstellungsposition 46 zwischen dem Teileträger 30' und der Werkzeugmaschine 28 einerseits von der Zuführung bzw. Entnahme eines weiteren Teileträgers andererseits ermöglicht.

Es versteht sich, daß in Abwandlung von der Ausführung gemäß Fig. 1 nicht nur ein einzelner Teileträger mittels der Zuführeinrichtung 29 in die Schleuse eingefahren werden kann, sondern daß die Zuführeinrichtung 29 auch zur Aufnahme eines Stapels von Teileträgern ausgebildet sein kann.

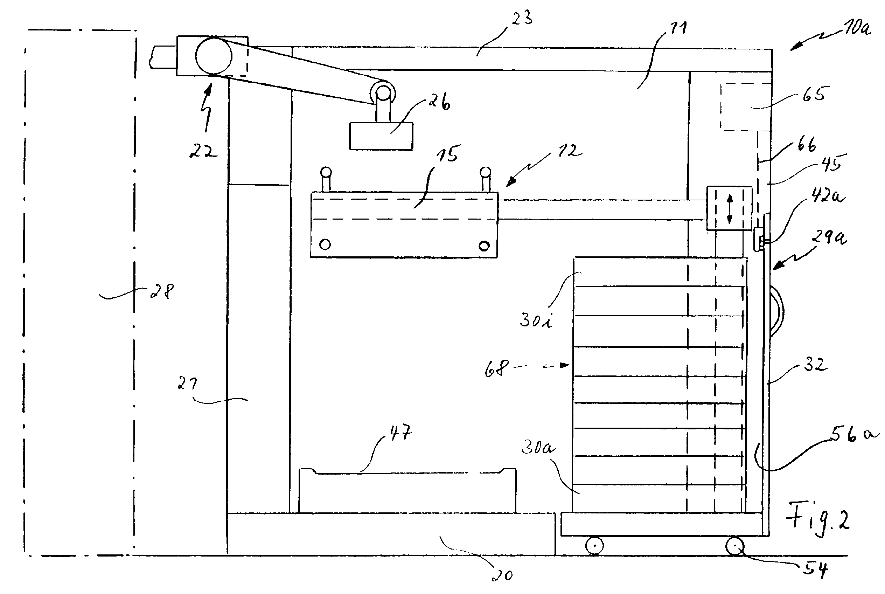

Darüber hinaus ist es denkbar, auf die Ausbildung einer Schleuse innerhalb des Handhabungsraums 11 zu verzichten. Eine solche Ausführung ist beispielhaft anhand der Fig. 2 im folgenden näher erläutert. Dabei werden für entsprechende Teile entsprechende Bezugsziffern verwendet.

Die insgesamt mit der Ziffer 10a bezeichnete Automationszelle entspricht in ihrem Aufbau weitgehend der zuvor anhand von Fig. 1 beschriebenen Automationszelle 10. Im Unterschied zu der zuvor beschriebenen Ausführung ist jedoch die Zuführeinrichtung 29a zur Aufnahme eines Teileträgerstapels 68 ausgebildet, wobei die einzelnen Teileträger 30a-i schematisch angedeutet sind. Ferner wurde auf die Ausbildung einer Schleuse zur Aufnahme der Zuführeinrichtung verzichtet.

Die Zuführeinrichtung 29a selbst ist wiederum als Verfahrwagen ausgebildet, durch dessen äußere Verkleidung 32 die Ladeöffnung 56a in eingefahrenem Zustand vollständig berührungssicher abgeschlossen ist. Zwischen Gehäuse 45 und der Verkleidung 32 der Zuführeinrichtung 29a ist eine Verriegelungseinrichtung 42a vorgesehen, um das vollständige Einfahren der Zuführeinrichtung 29a in den Handhabungsraum 11 überwachen zu können.

Da auf die Ausbildung einer Schleuse innerhalb des Handhabungsraums 11 verzichtet wurde, ist die Verriegelungseinrichtung 42a nunmehr mit einer Steuereinrichtung 65 der Automationszelle derart gekoppelt, daß bei nicht vollständig geschlossener Verriegelungseinrichtung ein Betrieb der Automationszelle innerhalb des Handhabungsraums unterbrochen wird, um so eine Unfallgefahr durch ein unbeabsichtigtes Eingreifen in den Handhabungsraum 11 zu vermeiden.

Es versteht sich, daß durch den Verzicht auf die Ausbildung einer Schleuse eine entsprechende Kostenersparnis erreicht werden kann, die allerdings dazu führt, daß während des Ein- bzw. Ausfahrens der Zuführeinrichtung 29a durch die Ladeöffnung 56a in den Handhabungsraum 11 dies mit einer kurzen Stillstandszeit erkauft wird.

In Abwandlung von Fig. 2 könnte natürlich wiederum eine Schleuse innerhalb des Handhabungsraums 11 vorgesehen sein, um derartige Stillstandszeiten zu vermeiden.

## Patentansprüche

1. Automationszelle zur Handhabung von Teilen, mit einem nach außen abgeschlossenen Handhabungsraum (11), innerhalb dessen eine Ladeeinrichtung (12) zur Aufnahme mindestens eines Teileträgers (30, 30', 30a-i) vorgesehen ist, die einen entlang einer horizontalen Achse (13) und einer vertikalen Achse (14) gesteuert verfahrbaren Schlitten (15) aufweist, und mit einer Zuführeinrichtung (29, 29a), die an den Handhabungsraum (11) ankoppelbar ist, um Teileträger (30, 30', 30a-i) in den Handhabungsraum (11) einzuschleusen und aus diesem auszuschleusen, dadurch gekennzeichnet, daß am Schlitten (15) Koppelelemente (48, 49, 50, 51) vorgesehen sind, denen Gegenelemente (34, 35, 52, 53) am Teileträger (30, 30', 30a-i) zugeordnet sind, derart, daß der Teileträger (30, 30', 30a-i) durch Verfahren des Schlittens (15) von der Zuführeinrichtung (29, 29a) auf den Schlitten (15) übernommen werden und bei einem weiteren Verfahren des Schlittens (15) an die Zuführeinrichtung (29, 29a) übergeben werden kann.

2. Automationszelle nach Anspruch 1, dadurch gekennzeichnet, daß innerhalb des Handhabungsraums (11) ein Speicherplatz (47) vorgesehen ist, auf dem ein Teileträger (30, 30') absetzbar ist, und daß am Schlitten (15) ein erster Satz (48, 49) von Koppelelementen zur Übergabe eines Teileträgers (30, 30') zwischen Zuführeinrichtung (29) und Speicherplatz (47) vorgesehen ist, und daß am Schlitten (15) ein zweiter Satz (50, 51) von Koppelelementen zum Verfahren eines Teileträgers (30, 30') zwischen Speicherplatz (47) und einer Bereitstellungsposition (46) vorgesehen sind, in der die Bereitstellungseinrichtung (22) Teile (31) von dem Teileträger (30') aufnehmen und aus dem Handhabungsraum (11) herausfahren kann und Teile (31) auf dem Teileträger (30') ablegen kann.

3. Automationszelle nach Anspruch 1 oder 2, dadurch gekennzeichnet, daß die Koppelelemente (48, 49, 50, 51) an einem jeden Teileträger (30, 30') als vorstehende Bolzenenden vorgesehen sind, denen entsprechende Haken als Gegenelemente (34, 35, 52, 53) am Schlitten (15) zugeordnet sind, oder daß an jedem Teileträger (30, 30') Haken vorgesehen sind, denen entsprechende Bolzen als Gegenelemente am Schlitten (15) zugeordnet sind.

4. Automationszelle nach Anspruch 1, 2 oder 3, dadurch gekennzeichnet, daß die Bereitstellungseinrichtung (22) ein Portal (23) umfaßt, an dem ein Schlitten (24) mit einem Handhabungselement (25, 26) verfahrbar ist, das zur Aufnahme und zur Ablage von Teilen (31) auf einem Teileträger (30', 30a-i) in der Bereitstellungsposition (46) von oben ausgebildet ist.

5. Automationszelle nach Anspruch 4, dadurch gekennzeichnet, daß der Speicherplatz (47) auf einem Niveau unterhalb der Bereitstellungsposition (46) vorgesehen ist, daß der erste Satz von Koppelelementen (48, 49) am unteren Ende des Schlittens (15) vorgesehen ist, und daß der zweite Satz von Koppelelementen (50, 51) am oberen Ende des Schlittens (15) vorgesehen ist.

6. Automationszelle nach einem der vorhergehenden Ansprüche, gekennzeichnet durch einen vertikalen Ständer (19), in dem eine Vertikaltachse (14) der Ladeeinrichtung (12) aufgenommen ist.

7. Automationszelle nach Anspruch 6, dadurch gekennzeichnet, daß der vertikale Ständer (19) mit einem Sockel (20) verbunden ist, der an seinem gegenüberliegenden Ende mit einem zweiten vertikalen Ständer (21) verbindbar ist.

8. Automationszelle nach einem der vorhergehenden Ansprüche, dadurch gekennzeichnet, daß am Schlitten (15) ein Sensor (62, 63) vorgesehen ist, der eine Erfassung der Relativposition zu einem Teileträger (30, 30') ermöglicht.

9. Automationszelle zur Handhabung von Teilen, insbesondere nach einem der vorhergehenden Ansprüche, mit einem nach außen durch ein Gehäuse (45) abgeschlossenen Handhabungsraum (11), innerhalb dessen eine Ladeeinrichtung (12) zur Aufnahme mindestens eines Teileträgers (30, 30', 30a-i) verfahrbar angeordnet ist, wobei das Gehäuse (45) eine Ladeöffnung (56) aufweist, an die eine Zuführeinrichtung (29, 29a) ankoppelbar ist, um Teileträger (30, 30', 30a-i) in den Handhabungsraum (11) einzuschleusen und aus diesem auszuschleusen, dadurch gekennzeichnet, daß die Ladeöffnung (56) durch die Zuführeinrichtung (29, 29a) verschließbar ist, und daß eine Verriegelungseinrichtung (42, 42a) zur Verriegelung der Zuführeinrichtung (29, 29a) mit dem Gehäuse (45) vorgesehen ist.

10. Automationszelle nach Anspruch 9, dadurch gekennzeichnet, daß die Zuführeinrichtung (29) als Transportwagen ausgebildet ist, der eine Verkleidung (32) zur Abdeckung der Ladeöffnung (56) aufweist.

11. Automationszelle nach Anspruch 9 oder 10, dadurch gekennzeichnet, daß innerhalb des Gehäuses (45) eine Schleuse (57) zum Einschleusen der Zuführeinrichtung (29) vorgesehen ist, und daß die Schleuse (57) gegenüber dem Handhabungsraum (11) abgetrennt und mit diesem über eine Beschickungstür (38) verbunden ist.

12. Automationszelle nach Anspruch 11, dadurch gekennzeichnet, daß eine Verriegelungseinrichtung (41) zur Verriegelung der Beschickungstür (38) mit der Schleuse (57) vorgesehen sind, die eine Ausschleusung der Zuführeinrichtung (29) nur bei geschlossener Beschickungstür (38) erlaubt.

13. Automationszelle nach einem der vorhergehenden Ansprüche, dadurch gekennzeichnet, daß die Zuführeinrichtung (29) eine Unterlage (33) zur Aufnahme und Zentrierung eines Teileträgers (30, 30a) aufweist.

14. Automationszelle nach einem der vorhergehenden Ansprüche, dadurch gekennzeichnet, daß die Zuführeinrichtung (29a) zur Aufnahme eines Stapels (68) von Teileträgern (30a-i) ausgebildet ist.
